# EUROPEAN PATENT SPECIFICATION

(11) **EP 2 171 565 B1**
(45) Date of publication and mention of the grant of the patent: **17.05.2017**
(21) Application number: 08792896.6
(22) Date of filing: 25.07.2008
(51) Int. Cl.: G06F 3/0488, G06F 3/041

(54) **PRESSURE SENSOR ARRAY APPARATUS AND METHOD FOR TACTILE SENSING**
DRUCKSENSORGRUPPENVORRICHTUNG UND VERFAHREN FÜR TAKTILE ERFASSUNG
APPAREIL À RÉSEAU DE DÉTECTEURS DE PRESSION ET PROCÉDÉ POUR DÉTECTION TACTILE

(30) Priority: 27.07.2007 KR 20070075525
(43) Date of publication of application: 07.04.2010
(73) Proprietor: Samsung Electronics Co., Ltd., Suwon-si, Gyeonggi-do, 443-742 (KR)
(72) Inventor: IM, June-Hyeok, Gyeonggi-do 443-742 (KR); LEE, Jong-Rim, Gyeonggi-do 443-742 (KR); KIM, Sae-Rome, Gyeonggi-do 443-742 (KR); KIM, Chul-Jin, Gyeonggi-do 443-742 (KR)
(74) Representative: Nederlandsch Octrooibureau
(86) International application number: PCT/KR2008/004351
(87) International publication number: WO 2009/017334

(56) References cited:
- EP-A2- 1 674 977
- EP-A2- 1 717 682
- EP-A2- 1 736 856
- WO-A1-97/36225
- WO-A2-01/52037
- FR-A1- 2 866 726
- KR-A- 20040 063 142
- KR-A- 20060 071 353
- US-A1- 2006 026 535
- US-A1- 2006 026 535
- US-A1- 2006 097 991
- US-A1- 2007 002 018
- US-B1- 6 459 424

## Description

### Technical Field

The present invention relates to a technique for supporting tactile devices and more particularly, to a pressure sensor array apparatus having multiple input levels usable in a compact device.

### Background Art

In currently used mobile terminals, a keypad is used as a primary input device. Typically, the keypad is constructed of mechanical switches in a two-dimensional array format. The keypad has a significantly low spatial resolution. Only two-dimensional locations can be used as an input value in the keypad.

The use of mechanical switch allows only an On/Off input on a predetermined area, and a user may feel very uncomfortable to press the switch by using his or her finger. The conventional keypad is limited in use since it receives an input of a predetermined key area. Moreover, the conventional keypad cannot be used for other purposes.

The conventional keypad can receive an input only according to a predetermined key. Thus, it is impossible to reconfigure the key for other purposes. In addition, the key has a limited size.

Four directional keys (i.e., left, right, top, and down) may be used so that flexible movement can be received by the user as an input by using the conventional keypad. However, the directional keys are still insufficient to provide a flexible movement.

A touchpad to be described below is another example of an input device. In order to sense movement on the touchpad, an input location needs to be moved by a user. That is, the user has to move a specific input location to extract a motion vector, which results in a spatial movement.

Since the conventional touchpad delivers the input in an On/Off manner, a pressure (e.g., a degree of strength, a level, a tactile sense, etc.) imposed by the user cannot be distinguished different levels.

If the touchpad is used without consideration of the pressure as described above, an input that may be significantly sensitive or insensitive in operation since sensibility of the touchpad cannot be controlled. In addition, an abnormal operation may be caused when the user mistakenly presses an adjacent key.

A touch screen to be described below is another example of the input device. The touch screen can be implemented in various manners and is primarily used to recognize a touched location of the screen. It is difficult for the touch screen to be used for other purposes.

The conventional touch screen is assumed to be a screen (i.e., a panel). The touch screen is designed for the purpose of touching the screen and, optionally, can perform a multi-touch function, a drag function, etc.

However, the touch screen has the same disadvantages as the touchpad with regard to being sensitive to different levels of pressure. Further, the touch screen has a limit in durability, and thus it is difficult to be used as a mouse or an input device for identifying multiple pressures.

Therefore, the aforementioned exemplary input devices cannot distinguish the pressures imposed by user and is insensitive to the application of different pressure levels.

US 2006/0026535 A1 discloses receiving raw data in a digitized form, that includes values for each node of the touch screen. The values may be between 0 and 256 where 0 equates to no touch pressure and 256 equates to full touch pressure. If the distance between the two fingers increases (spread apart), a zoom-in signal is generated. If the distance between two fingers decreases (close together). a zoom-out signal is generated.

US 6, 459, 424 B1 discloses an aim to have a touch screen having varying combinations of resolution and touch sensitivity for different applications.

### Disclosure of Invention

### Technical Solution

Aspects of the invention are defined by the independent claims. The dependent claims define advantageous embodiments.

Accordingly, an aspect of the present invention is to provide a pressure sensor array apparatus and method for tactile sensing.

Another aspect of the present invention is to provide an input apparatus and method capable of changing data by analyzing a tactile input array.

Another aspect of the present invention is to provide an input apparatus and method in which motion sensing, continuous operations of movement and touch, and pressure information can be obtained in a small area in a mobile terminal and a compact game terminal.

Another aspect of the present invention is to provide an apparatus, having a high resolution and a compact size, for receiving and analyzing an input in an 1 area, and a method thereof.

Another aspect of the present invention is to provide an apparatus and method capable of integrating multiple functions such as a mousse, a keypad, a key input, a joystick, etc., into one input device.

Another aspect of the present invention is to provide an apparatus and method capable of responding to continuous operational inputs and pressures by using for example, a distribution of input pressures, an area of a pressure, a center of gravity, an acceleration, movement of a center point, three-dimensional calculation, etc.

Another aspect of the present invention is to provide an apparatus and method capable of representing human sensitivity according to a human touch by analyzing a degree of strength, repetition, strength, pressure variation, touch time, etc.

In accordance with an aspect of the present invention, an input apparatus for tactile sensing is provided. The apparatus includes a sensor array for outputting input data in an array format according to a touch input, and a controller for obtaining first input data for a first input from the sensor array if the first input above a predetermined pressure is imposed on the sensor array, for obtaining second input data for a second input from the sensor array if the second input above a predetermined pressure is imposed on the sensor array, for generating third input data indicating an input characteristic by comparing the first input data and the second input data, and for operating according to a program based on the third input data.

In accordance with another aspect of the present invention, an input method for tactile sensing is provided. The method includes obtaining first input data for a first input if the first input above a predetermined pressure is imposed on a sensor array that outputs input data in an array format, obtaining second input data for a second input if the second input above a predetermined pressure is imposed on the sensor array, generating third input data indicating an input characteristic by comparing the first input data and the second input data, and operating according to a program based on the third input data.

### Brief Description of the Drawings

The above and other aspects, features and advantages of certain exemplary embodiments of the present invention will be more apparent from the following description taken in conjunction with the accompanying drawings in which:
FIG. 1 is a block diagram of an input device according to an exemplary embodiment of the present invention;
FIG. 2 illustrates an input process using a sensor array according to an exemplary embodiment of the present invention;
FIG. 3 illustrates an internal structure of a sensor array according to an exemplary embodiment of the present invention;
FIG. 4 illustrates a driving circuit for driving a sensor array and its peripheral elements according to an exemplary embodiment of the present invention;
FIG. 5 is a flowchart illustrating an input process according to a first exemplary embodiment of the present invention;
FIG. 6 illustrates an example of an input applied to a keypad according to an exemplary embodiment of the present invention;
FIG. 7 is a flowchart illustrating an input process according to a second exemplary embodiment of the present invention;
FIG. 8 illustrates an example of an input applied to a touchpad, a mouse, and a joystick according to an exemplary embodiment of the present invention;
FIG. 9 illustrates an input applied to a side key according to an exemplary embodiment of the present invention;
FIG. 10 illustrates an input applied to a navigation key according to an exemplary embodiment of the present invention;
FIG. 11 illustrates an input applied to a game according to an exemplary embodiment of the present invention;
FIG. 12 illustrates an input applied to a musical instrument according to an exemplary embodiment of the present invention; and
FIG. 13 illustrates an input used as a mouse function for map search according to an exemplary embodiment of the present invention.

### Best Mode for Carrying Out the Invention

Embodiments of the present invention will be described below with reference to the accompanying drawings. In the following description, well-known functions or constructions are not described in detail since they would obscure the invention in unnecessary detail.

A pressure sensor array apparatus and method for tactile sensing is described.

The present invention uses a plurality of tactile input arrays capable of measuring location information indicating a point where a user presses and a degree of strength exerted when the user presses the point.

The tactile input array can continuously receive information on a plurality of locations and pressures through the array during a time period when the user presses the array. Since the tactile input array must sense delicate movement of a finger, it must be designed to be below a minimum resolution of the finger, which in one aspect of the invention is below 1 millimeter (mm).

In the tactile input array, user's intention is recognized by using an analysis result of a location, pressure, and movement of an input. Various applications are possible according to an analysis method.

That is, with a user interface using the tactile input array, functions of a keypad, a multi-key pad, a mouse, a joystick, etc., can be implemented by combining information on a plurality of tactile inputs (i.e., location information) and pressures which are input by the user.

Signals are input through the tactile input array, and are analyzed by using an analysis method according to respective purposes in order to recognize user's intention. The analysis method includes finding a center-of-gravity point, moving a center point, detecting a pressure threshold, calculating a pressure distribution, analyzing an input profile, etc.

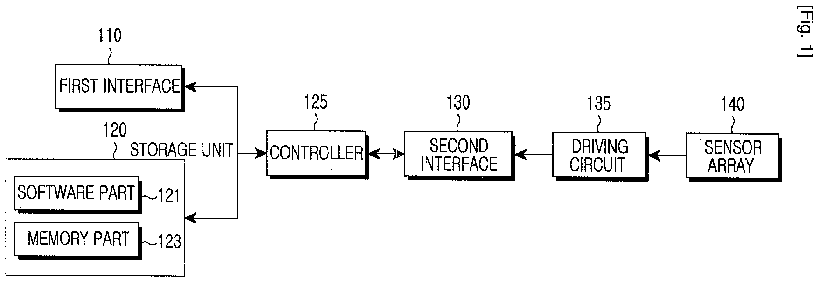

FIG. 1 is a block diagram of an input device according to an exemplary embodiment of the present invention.

Referring to FIG. 1, the input device consists of a first interface 110, a storage unit 120 including a software part 121 and a memory part 123, a controller 125, a second interface 130, a driving circuit 135, and a sensor array 140.

The sensor array 140 is a pressure sensor array. Location data and pressure data are input to the sensor array 140 by using a finger or a stylus.

The driving circuit 135 analyzes an output value of the sensor array 140 and thus detects the location and pressure input to the sensor array 140.

The second interface 130 connects the driving circuit 135 and the controller 125.

The controller 125 analyzes the location and pressure output from the driving circuit 135 and thus performs operations according to the software part 121 and algorithms (or data) stored in the memory part 123. Functions of the controller 125 will be described below in detail.

The first interface 110 is used to transmit a processing result of the memory part 123 and includes both wired and wireless interfaces.

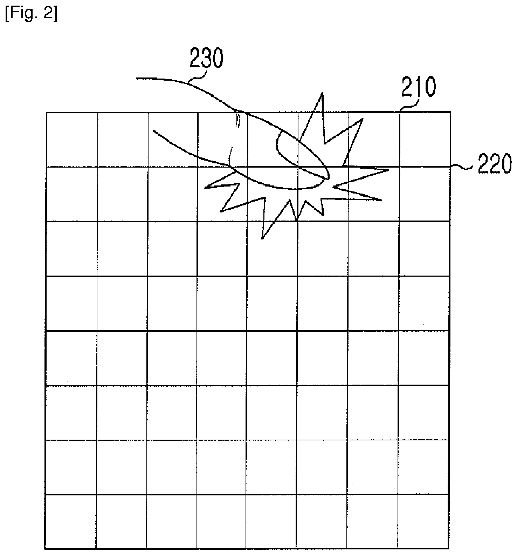

FIG. 2 illustrates an input process using a sensor array according to an exemplary embodiment of the present invention.

Referring to FIG. 2, a sensor array 210 of the present invention is an input device having a resolution of 1mm and using a minimum resolution of a finger 230.

The sensor array 210 can sense a pressure imposed by the finger 230 at an intersection point 220 and has a sufficient capacity so that general strength imposed by a user can be distinguished in several levels. In general, the sensor 210 can sense the pressure in the range of 100g to 10kg.

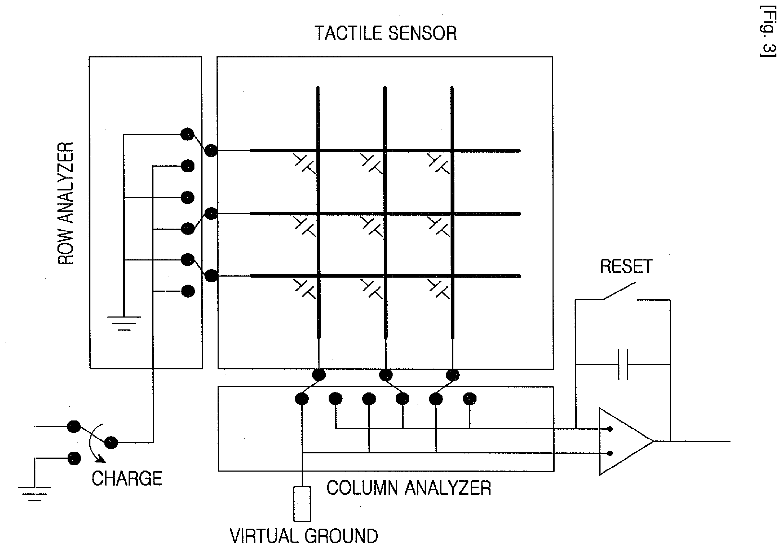

FIG. 3 illustrates an internal structure of a sensor array according to an exemplary embodiment of the present invention.

Referring to FIG. 3, the sensor array can be implemented using various elements. A capacitor is used in FIG. 3 to implement the sensor array.

In addition to the capacitor, a resistor may be used to implement the sensor array. A surface acoustic wave may be used in implementation.

The sensor array can sense a pressure imposed by a finger, for example, and has a sufficient capacity so that general strength imposed by a user can be distinguished in several levels. In general, the sensor array can sense the pressure in the range of 100g to 10kg.

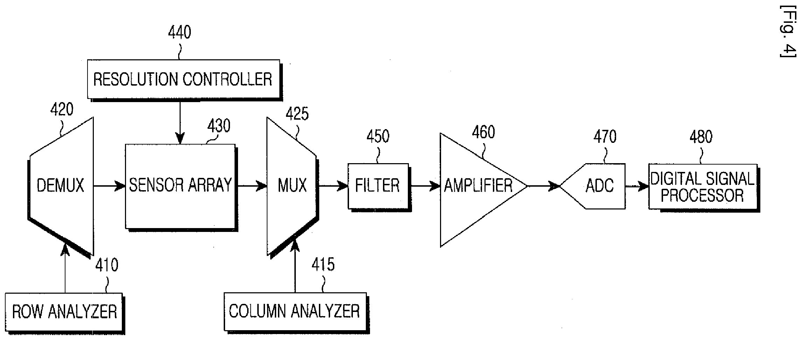

FIG. 4 illustrates a driving circuit for driving a sensor array and its peripheral elements according to an exemplary embodiment of the present invention.

The driving circuit of FIG. 4 is the same as the driving circuit 135 of FIG. 1. A function of a digital signal processor 480 may be performed by the controller 125 of FIG. 1.

It is assumed that a sensor array 430 uses a capacitor as an internal element.

The driving circuit consists of a row analyzer 410, a Demultiplexer (or demux) 420, a Multiplexer (or mux) 425, a column analyzer 415, a resolution controller 440, a filter 450, an amplifier 460, and an Analog Digital Converter (ADC) 470.

The row analyzer 410 determines a signaling order with respect to all row input elements existing on the sensor array 430.

The demux 420 provides the sensor array 430 with specific level of voltage according to the order determined by the row analyzer 410.

The column analyzer 415 determines an order for extracting column data to be output to the sensor array 430.

The mux 425 extracts data according to the order determined by the column analyzer 415 and outputs the extracted data to the filter 450.

The filter 450 removes a noise component from a received signal and then outputs the noise-removed signal to the amplifier 460.

The amplifier 460 amplifies the noise-removed signal and then outputs the amplified signal to the ADC 470.

The ADC 470 converts the amplified signal into a digital signal and then outputs the converted signal to the digital signal processor 480.

The digital signal processor 480 processes the converted digital signal and determines an input direction, a pressure, a location, etc. Operations of the digital signal processor 480 will be described below.

The resolution controller 440 adjusts an input resolution of the sensor array 430. In general, it is known that a human finger has a resolution in the range of 0.7 to 1 mm. When used in an area above 10 mm, a large number of contact points are produced, and thus more operations are needed to process the contact points. Therefore, an application program is used to reduce the resolution by 1/4 in width and 1/2 in length. In general, the width and the length are divided according to odd and even arrangements to determine On/Off.

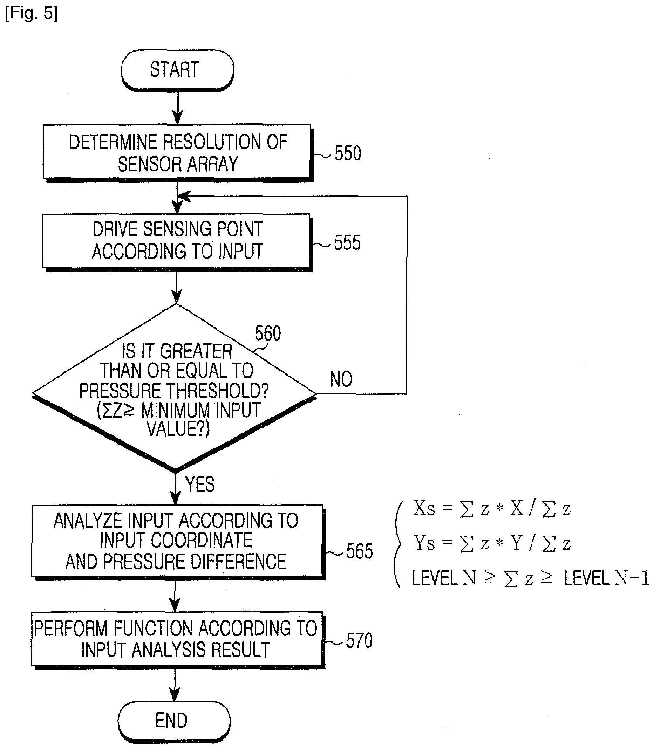

FIG. 5 is a flowchart illustrating an input process according to a first exemplary embodiment of the present invention.

Referring to FIG. 5, a resolution of a sensor array is determined (step 550).

If a sensing point on the sensor array is driven according to an input of a user (step 555), i.e., if the user presses the sensor array, it is determined whether a pressure imposed by the user is above a specific level, i.e., a pressure threshold (step 560). A minimum input value for operation may change according to a standard such as an application program driving scenario.

If the pressure is above the pressure threshold, the input is analyzed according to a coordinate and a pressure difference of the input (step 565). The pressure values are 3-dimensionally added up.

For example, a row coordinate (i.e., Xs coordinate) may be obtained by Xs=∑z * X/ ∑z, and a column coordinate (i.e., Ys coordinate) may be obtained by Ys=∑z * Y/∑z. In addition, a pressure sum ∑z may be classified according to a level N to obtain pressure strength (i.e., level N ≥ ∑z ≥ level N-1).

To minimize an input error, a method such as "Moving Average" may be used in which locations are measured several times and the measured locations are divided by the number of measurements.

In addition, an input depending on the pressure difference can be distinguished. In this case, a user's intention can be recognized according to a total sum of pressures or a variation of a pressed area (or combination of the two).

Since the pressure strength can be distinguished at the same location according to the method of the present invention, another input can be received without having to move the finger.

Thereafter, a predetermined function is performed according to the input analysis result (step 570), and the procedure of FIG. 5 ends.

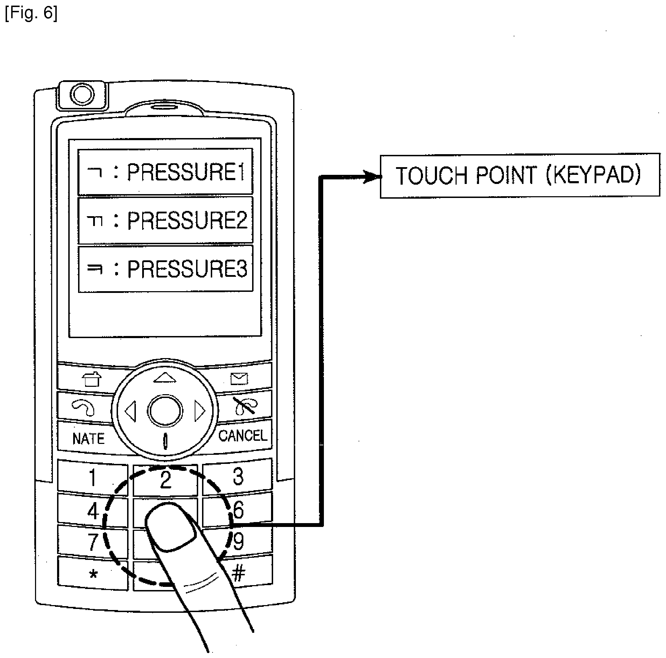

FIG. 6 illustrates an example of an input applied to a keypad according to an exemplary embodiment of the present invention.

Referring to FIG. 6, the keypad consists of a sensor array. In this example, separate characters are input according to pressure strength of the input applied to a specific area.

That is, one of Korean consonants (i.e., 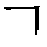 , 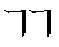 , and 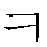 ) can be selectively input according to the pressure strength based on the input.

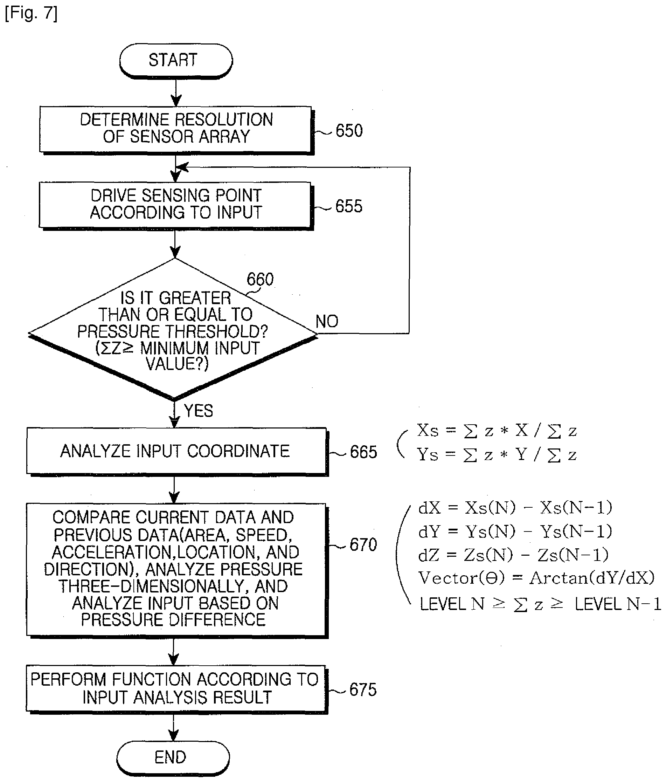

FIG. 7 is a flowchart illustrating an input process according to a second exemplary embodiment of the present invention.

Referring to FIG. 7, a resolution of a sensor array is determined (step 650).

If a sensing point on the sensor array is driven according to an input of a user (step 655), i.e., if the user presses the sensor array, it is determined whether a pressure imposed by the user is above a specific level, i.e., a pressure threshold (step 660). A minimum input value (pressure threshold) for operation may change according to a standard such as an application program driving scenario.

If the pressure is above the pressure threshold, the input is analyzed according to a coordinate and a pressure difference with respect to the pressure threshold of the input (step 665). The pressure values are 3-dimensionally added up.

For example, a row coordinate (i.e., Xs coordinate) may be obtained by Xs=∑z * X/ ∑z, and a column coordinate (i.e., Ys coordinate) may be obtained by Ys=∑z * Y/∑z.

Thereafter, current data is compared with previous data, a pressure is three-dimensionally analyzed, and an input based on a pressure difference between the current pressure and the previous pressure is analyzed (step 670). The data may represent be an area, a speed, an acceleration, a location, a direction, etc. Various algorithms can be used to predict a movement direction of a user input by moving only a finger tip.

For example, an angle of movement can be obtained in such a manner that variations of X and Y (i.e., dX=Xs(N)-Xs(N-1), dY=Ys(N)-Ys(N-1)) are predicted to calculate an "arc tangent" between two coordinates, that is, Vector(θ) = Arctan(dY/dX). This is represented with an angle indicating a user movement.

In addition, movement can be obtained by simply calculating a movement point of a center of gravity. In this case, it is important to calculate a pressure. Further, distinctions of a pressure difference (i.e., dZ=ZYs(N)-Zs(N-1)), a pressure sum (i.e., ∑z), a pressure level (i.e., level N ≥ ∑z ≥ level N-1) must also be taken into consideration.

In general, since an area in contact with the finger increases when it is pressed with more strength, a sum (i.e., ∑X*(Z> minimum pressure)+ ∑Y*(Z> minimum pressure)) of areas whose pressure values are changed also needs to be taken into consideration.

As described above, a pressure distribution is sequentially obtained according to movement of the finger. By using the distribution together with several algorithms, user's intention can be recognized with a small movement. Accordingly, a key input can be achieved while the input device is used as a mousse, a joystick, or a touchpad.

Thereafter, a predetermined function is performed according to the input analysis result (step 675), and the procedure of FIG. 7 ends.

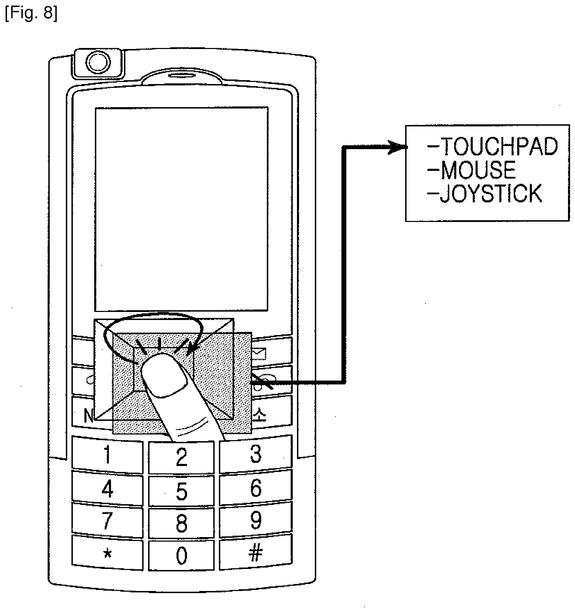

FIG. 8 illustrates an example of an input applied to a touchpad, a mousse, and a joystick according to an exemplary embodiment of the present invention.

Referring to FIG. 8, an input unit consists of a sensor array. The input unit senses and analyzes a location, movement, and pressure of a user input, and operates according to an algorithm designed on the basis of the analysis result.

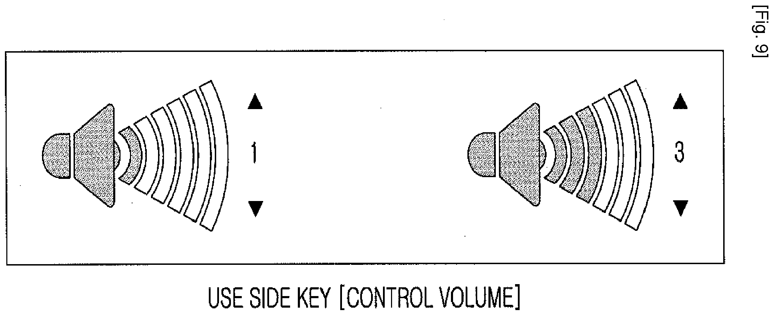

FIG. 9 illustrates an input applied to a side key according to an exemplary embodiment of the present invention.

Referring to FIG. 9, the side key consists of a sensor array. Volume change depending on a pressure is shown in the figure. For example, the volume may increase in proportion to the pressure.

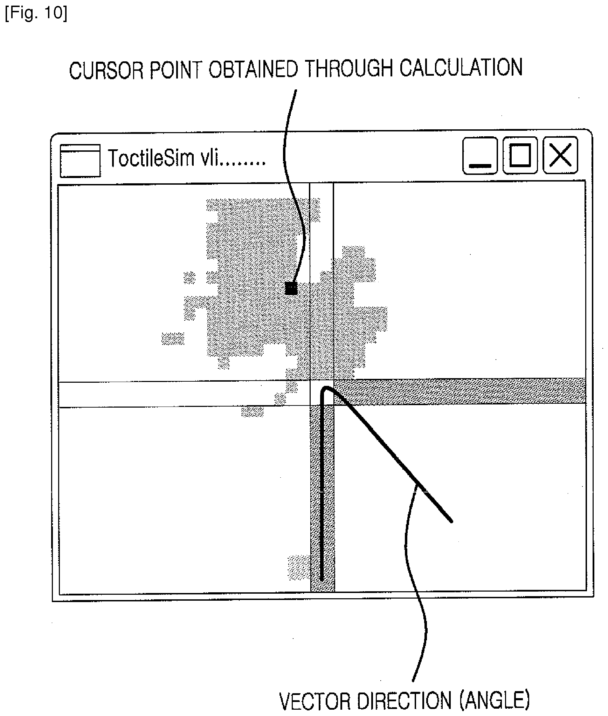

FIG. 10 illustrates an input applied to a navigation key according to an exemplary embodiment of the present invention.

Referring to FIG. 10, a mobile terminal is equipped with the navigation key. If the navigation key is constructed of a sensor array, a current location can be recognized by calculating a cursor point when the input is applied. A direction of movement can be known by obtaining a vector direction.

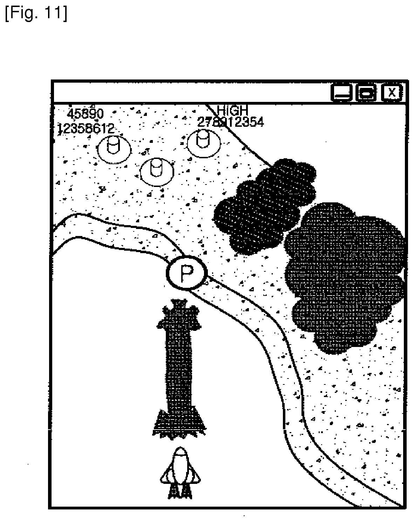

FIG. 11 illustrates an input applied to a game according to an exemplary embodiment of the present invention.

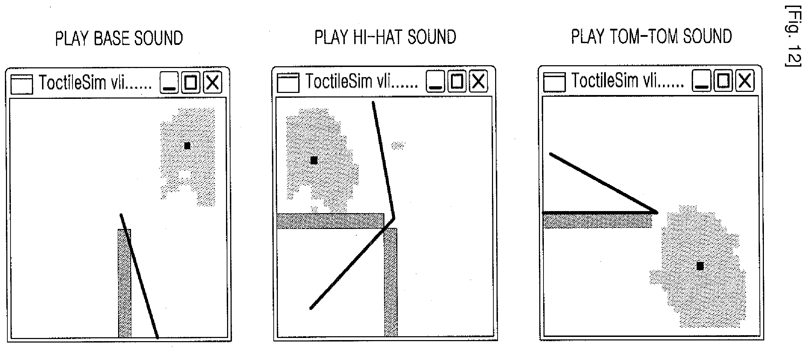

Referring to FIG. 11, a missile and a bomb can be distinguished using pressure strength in a shooting game. In addition, movement of a user character can be controlled. That is, different operations can be performed according to the pressure strength FIG. 12 illustrates an input applied to a musical player according to an exemplary embodiment of the present invention.

Referring to FIG. 12, an input area is defined in a sensor array so that a different musical instrument can be played according to the area. A degree of strength can be distinguished according to a pressure applied. Human sensitivity can be delivered by distinguishing strength/weakness of touch, time, location, repetition, etc.

That is, a base sound, a hi-hat sound, and a tom-tom sound can be selectively played according to the area upon which a pressure is applied.

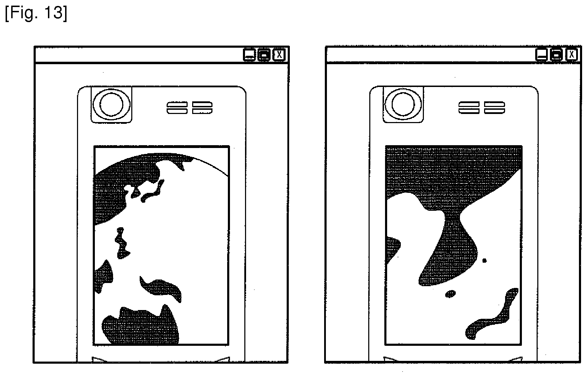

FIG. 13 illustrates an input used as a mouse function for map search according to an exemplary embodiment of the present invention.

Referring to FIG. 13, by using the aforementioned mouse function, a zoom-in function can be performed by adding a pressure at a desired position while searching a map. A zoom-out function can be performed by reducing the pressure.

To resume a mouse mode, a finger is touched off and a predetermined pressure value is set. This method adds convenience when using a compact device.

Since the pressure can be sensed according to a user's touch, the present invention has an advantage in that a different output can be obtained according to pressure strength.

According to the present invention, motion sensing, continuous operations of movement and touch, and pressure information can be obtained in a small area in addition to a limited input that can be obtained through a conventional keypad, touchpad, mousse, etc., in a mobile terminal and a compact game terminal. Therefore, it is possible to implement a more evolved input device such as a touchpad, a keypad, a mousse, a joystick, etc.

The above-described methods according to the present invention can be realized in hardware or as software or computer code that can be stored in a recording medium such as a CD ROM, an RAM, a floppy disk, a hard disk, or a magneto-optical disk or downloaded over a network, so that the methods described herein can be rendered in such software using a general purpose computer, or a special processor or in programmable or dedicated hardware, such as an ASIC or FPGA. As would be understood in the art, the computer, the processor or the programmable hardware include memory components, e.g., RAM, ROM, Flash, etc. that may store or receive software or computer code that when accessed and executed by the computer, processor or hardware implement the processing methods described herein.

While the present invention has been shown and described with reference to certain exemplary embodiments thereof, it will be understood by those skilled in the art that various changes in form and details may be made therein without departing from the scope of the present invention as defined by the appended claims . Therefore, the scope of the invention is defined not by the description of the invention but by the appended claims and their equivalents, and all differences within the scope will be construed as being included in the present invention.

## Claims

1. An input apparatus for tactile sensing, the apparatus comprising:
a sensor array for outputting input data in an array format according to a touch input; and
a controller for:
obtaining a first input data for a first input from the sensor array if the first input above a first predetermined pressure is imposed on the sensor array,
obtaining a second input data for a second input from the sensor array if the second input above a second predetermined pressure is imposed on the sensor array,
wherein the first predetermined pressure and the second predetermined pressure are changed according to a standard, and wherein the standard is an application program driving scenario,
generating a third input data indicating an input characteristic by comparing the first input data and the second input data, wherein the third input data is generated based on a pressure difference between a current pressure corresponding to the second input data and a previous pressure corresponding to the first input data, and
operating according to a program based on the third input data,
wherein the first input data comprises an input location and an input pressure applied to the sensor array,
wherein the input location is determined based on coordinates where pressures are detected on the sensor array and a sum of the pressures, and
wherein the controller is arranged for classifying the sum of the pressures according to levels to obtain a pressure strength.

2. The apparatus of claim 1, wherein the second input data is an input location and an input pressure applied to the sensor array.

3. A method for providing input through tactile sensing, the method comprising:
obtaining a first input data for a first input if the first input is above a predetermined pressure;
obtaining a second input data for a second input if the second input is above a second predetermined pressure;
wherein the first predetermined pressure and the second predetermined pressure are changed according to a standard, wherein the standard is an application program driving scenario;
generating third input data indicating an input characteristic by comparing the first input data and the second input data, wherein the third input data is generated based on a pressure difference between a current pressure corresponding to the second input data and a previous pressure corresponding to the first input data, and
operating according to a program based on the third input data,
wherein the first input data comprises an input location and an input pressure applied to the sensor array,
wherein the input location is determined based on coordinates where pressures are detected on the sensor array and a sum of the pressures, and
wherein the method further comprises classifying the sum of the pressures according to levels to obtain a pressure strength.

4. The method of claim 3, wherein the second input data is an input location and an input pressure for the second input.

## Patentansprüche

1. Eingabevorrichtung für taktile Erfassung, wobei die Vorrichtung Folgendes umfasst:
eine Sensoranordnung zum Ausgeben von Eingabedaten in einem Feldformat gemäß einer Berühreingabe und
eine Steuerung zum
Erlangen eines ersten Eingabedatums für eine erste Eingabe von der Sensoranordnung, wenn die erste Eingabe oberhalb eines ersten vorgegebenen Druckes auf die Sensoranordnung ausgeübt wird,
Erlangen eines zweiten Eingabedatums für eine zweite Eingabe von der Sensoranordnung, wenn die zweite Eingabe oberhalb eines zweiten vorgegebenen Druckes auf die Sensoranordnung ausgeübt wird,
wobei der erste vorgegebene Druck und der zweite vorgegebene Druck gemäß einem Standard geändert werden und wobei der Standard ein Anwendungsprogramm-Ansteuerszenario ist,
Erzeugen eines dritten Eingabedatums, das eine Eingabecharakteristik anzeigt, durch Vergleichen des ersten Eingabedatums und des zweiten Eingabedatums, wobei das dritte Eingabedatum basierend auf einer Druckdifferenz zwischen einem aktuellen Druck, der dem zweiten Eingabedatum entspricht, und einem vorherigen Druck erzeugt wird, der dem ersten Eingabedatum entspricht, und
Betreiben gemäß einem Programm basierend auf dem dritten Eingabedatum,
wobei das erste Eingabedatum einen Eingabeort und einen Eingabedruck umfasst, der auf die Sensoranordnung ausgeübt wird,
wobei der Eingabeort basierend auf Koordinaten, an denen Drücke auf der Sensoranordnung detektiert werden, und einer Summe der Drücke bestimmt wird und
wobei die Steuerung zum Klassifizieren der Summe der Drücke nach Höhen ausgelegt ist, um eine Druckstärke zu erlangen.

2. Vorrichtung nach Anspruch 1, wobei das zweite Eingabedatum ein Eingabeort und ein Eingabedruck ist, der auf die Sensoranordnung ausgeübt wird.

3. Verfahren zum Bereitstellen von Eingabe über taktile Erfassung, wobei das Verfahren Folgendes umfasst:
Erlangen eines ersten Eingabedatums für eine erste Eingabe, wenn die erste Eingabe oberhalb eines vorgegebenen Druckes ist;
Erlangen eines zweiten Eingabedatums für eine zweite Eingabe, wenn die zweite Eingabe oberhalb eines zweiten vorgegebenen Druckes ist;
wobei der erste vorgegebene Druck und der zweite vorgegebene Druck gemäß einem Standard geändert werden, wobei der Standard ein Anwendungsprogramm-Ansteuerszenario ist;
Erzeugen dritter Eingabedaten, die eine Eingabecharakteristik anzeigen, durch Vergleichen des ersten Eingabedatums und des zweiten Eingabedatums, wobei das dritte Eingabedatum basierend auf einer Druckdifferenz zwischen einem aktuellen Druck, der dem zweiten Eingabedatum entspricht, und einem vorherigen Druck erzeugt wird, der dem ersten Eingabedatum entspricht, und
Betreiben gemäß einem Programm basierend auf dem dritten Eingabedatum,
wobei das erste Eingabedatum einen Eingabeort und einen Eingabedruck umfasst, der auf die Sensoranordnung ausgeübt wird,
wobei der Eingabeort basierend auf Koordinaten, an denen Drücke auf der Sensoranordnung detektiert werden, und einer Summe der Drücke bestimmt wird und
wobei das Verfahren ferner Klassifizieren der Summe der Drücke nach Höhen umfasst, um eine Druckstärke zu erlangen.

4. Verfahren nach Anspruch 3, wobei das zweite Eingabedatum ein Eingabeort und ein Eingabedruck für die zweite Eingabe ist.

## Revendications

1. Appareil d'entrée pour détection tactile, l'appareil comprenant :
un réseau de capteurs pour délivrer des données d'entrée dans un format de réseau en fonction d'une entrée de toucher ; et
un organe de commande pour effectuer :
l'obtention d'une première donnée d'entrée pour une première entrée à partir du réseau de capteurs si la première entrée au-dessus d'une première pression prédéterminée est imposée sur le réseau de capteurs,
l'obtention d'une deuxième donnée d'entrée pour une deuxième entrée à partir du réseau de capteurs si la deuxième entrée au-dessus d'une deuxième pression prédéterminée est imposée sur le réseau de capteurs,
dans lequel la première pression prédéterminée et la deuxième pression prédéterminée sont changées en fonction d'une norme, et dans lequel la norme est un scénario de commande de programme d'application,
la génération d'une troisième donnée d'entrée indiquant une caractéristique d'entrée par la comparaison de la première donnée d'entrée et de la deuxième donnée d'entrée, dans lequel la troisième donnée d'entrée est générée sur la base d'une différence de pression entre une pression actuelle correspondant à la deuxième donnée d'entrée et une pression précédente correspondant à la première donnée d'entrée, et
le fonctionnement selon un programme sur la base de la troisième donnée d'entrée,
dans lequel la première donnée d'entrée comprend un emplacement d'entrée et une pression d'entrée appliquée au réseau de capteurs,
dans lequel l'emplacement d'entrée est déterminé sur la base de coordonnées auxquelles des pressions sont détectées sur le réseau de capteurs et d'une somme des pressions, et
dans lequel l'organe de commande est agencé pour effectuer la classification de la somme des pressions en fonction de niveaux pour obtenir une force de pression.

2. Appareil selon la revendication 1, dans lequel la deuxième donnée d'entrée est un emplacement d'entrée et une pression d'entrée appliquée au réseau de capteurs.

3. Procédé pour fournir une entrée par l'intermédiaire d'une détection tactile, le procédé comprenant :
l'obtention d'une première donnée d'entrée pour une première entrée si la première entrée est au-dessus d'une pression prédéterminée ;
l'obtention d'une deuxième donnée d'entrée pour une deuxième entrée si la deuxième entrée est au-dessus d'une deuxième pression prédéterminée ;
dans lequel la première pression prédéterminée et la deuxième pression prédéterminée sont changées en fonction d'une norme, dans lequel la norme est un scénario de commande de programme d'application,
la génération d'une troisième donnée d'entrée indiquant une caractéristique d'entrée par la comparaison de la première donnée d'entrée et de la deuxième donnée d'entrée, dans lequel la troisième donnée d'entrée est générée sur la base d'une différence de pression entre une pression actuelle correspondant à la deuxième donnée d'entrée et une pression précédente correspondant à la première donnée d'entrée, et
le fonctionnement selon un programme sur la base de la troisième donnée d'entrée,
dans lequel la première donnée d'entrée comprend un emplacement d'entrée et une pression d'entrée appliquée au réseau de capteurs,
dans lequel l'emplacement d'entrée est déterminé sur la base de coordonnées auxquelles des pressions sont détectées sur le réseau de capteurs et d'une somme des pressions, et
dans lequel le procédé comprend en outre la classification de la somme des pressions en fonction de niveaux pour obtenir une force de pression.

4. Procédé selon la revendication 3, dans lequel la deuxième donnée d'entrée est un emplacement d'entrée et une pression d'entrée pour la deuxième entrée.
